# EUROPEAN PATENT APPLICATION

(11) **EP 4 516 814 A1**
(43) Date of publication of application: **05.03.2025**
(21) Application number: 24197565.5
(22) Date of filing: 30.08.2024
(51) Int. Cl.: C08C 19/00, C08C 19/10, H01M 4/52, H01M 4/62

(54) **ELECTRODE COMPRISING BINDER WITH ORGANIC FLUORESCENT TAG**

(30) Priority: 31.08.2023 SE 2351024
(71) Applicant: Northvolt AB, 112 47 Stockholm (SE)
(72) Inventor: Pohlman, Andrew, 932 35 Ursviken (SE)
(74) Representative: Engman, Eva Jessica

(57) **Abstract**

This disclosure provides a slurry for forming an electrode comprising a tagged binder. The tagged binder comprises a polymer which is bound to an organic fluorescent tag, which introduces a fluorescent moiety to the binder. During or after battery fabrication, said fluorescent moiety allows for easy visualization of binder migration within the electrode.

## Description

### FIELD OF INVENTION

The present invention relates to slurries for forming electrodes comprising tagged binders. Further, the invention relates to methods of preparing said slurries, and the use of them in cell fabrication. In particularly, the slurries comprising tagged binders allow for easy monitoring of binder migration during or after cell fabrication.

### BACKGROUND

There has been significant interest in the use of rechargeable batteries for use in energy storage applications. In particular, lithium-ion batteries have been widely applied in diverse industries, such as electronic devices, power tools, satellites, utility-scale storage and electric vehicles.

Lithium-ion battery electrodes typically comprise active materials, binders, and conductive additives. Binders and conductive additives are essential components for electrodes, but their proportions must be minimized to maximize the energy density of lithium-ion cells.

Achieving a uniform distribution of these materials in the electrode maximizes their function at a minimal content, contributing to high energy density and improved cell quality.

However, during fabrication the binder may migrate resulting in an uneven distribution of binder throughout the electroactive layer. The uneven distribution may cause a significant reduction in adhesion properties, electrical conductivity, and performance of the cell. Further, the binder migration increases the risk of delamination of the electrode.

Therefore, an accurate method for monitoring the binder distribution within an electrode is desirable.

Some binders are inherently easier to monitor. For example, polyvinylidene fluoride (PVDF) contains fluorine which may be detectable by a number of spectroscopic methods. However, PVDF suffers from several drawbacks, such as low binding affinity, poor electrochemical and thermal stability, poor processability in water and potential toxicity. There is also a growing need to produce cells without using fluorochemicals.

A more environmentally friendly binder is styrene butadiene rubber (SBR). However, given that both anodes and cathodes comprise other sources of carbon (such as graphene and conductive carbon additives), SBR requires tagging to be visualized by standard microscopy or spectroscopic methods.

Currently, the osmium tetroxide (OsO₄) tagging technique is used. OsO₄ reacts with the double bonds (alkenes) on the SBR backbone through a cycloaddition, and can then easily be detected by a number of methods. However, this methodology is typically only possible post-cell production, and requires the cell to be disassembled and inspected. Moreover, osmium tetroxide is highly toxic and expensive making it an unappealing reagent to use in large quantities.

The objective of the disclosure is therefore to find a cheaper and safer alternative to stain the binder to easily monitor the binder migration during or after cell production.

The present invention aims to tag a binder polymer having alkene functionalities with an organic fluorescent tag to easily detect binder migration. Instead of using toxic and expensive materials, more environmentally benign as well as cheaper organic molecules are used.

### SUMMARY

The present disclosure relates to tagged binder polymers used in electrodes to allow for easy visualization. In particular, cheap and environmentally benign organic molecules are used as organic fluorescent tags, which typically react through cycloadditions with alkene functionalities of the binder polymer to form a tagged binder.

According to an aspect of the present disclosure, there is provided a slurry for forming an electrode comprising dispersing medium, electrode active material, tagged binder, and optionally conductive additives, wherein the tagged binder comprises a polymer bound to an organic fluorescent tag.

Also provided are electrodes comprising a tagged binder, wherein the tagged binder comprises a polymer bound to an organic fluorescent tag, as well as cells comprising such electrodes, and devices such as vehicles comprising such cells (or batteries of such cells).

According to a second aspect of the disclosure, there are provided methods of forming said slurry. Further, methods of forming an electrode and a cell from said slurry are provided.

According to a third aspect of the disclosure, there is provided a process of tagging a binder. Also provided is the tagged binder produced by said process.

According to a fourth aspect of the disclosure, there are provided methods for monitoring binder migration in an electrode.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### DETAILED DESCRIPTION

The disclosure relates to slurries comprising tagged binders.

In the following sections, various components are presented:

### ELECTRODE ACTIVE MATERIALS

The term "electrode active material" is to be understood as an electrochemical species which can be oxidised and reduced in a system which enables a cell to produce electric energy during discharge. The role of the electrode active materials is to reversibly bind ions (such as lithium ions) during cell charge and discharge cycles.

Electrode active materials include anode active materials and cathode active materials.

Each electrode may comprise electrode active materials, conductive additives, and a binder.

In each electrode, the electrode active material may be present in an amount of from about 60-99.9 wt% active material, for example from about 70-99.9 wt%, from about 80-99.8 wt%, from about 90-99.6 wt%, or from about 95-99.5 wt% active material based on the total weight of the dry composition (i.e. the slurry composition excluding the dispersing medium, or alternatively the electrode).

Preferably the active layer comprises from about 96-99.5 wt% active material, even more preferably the active layer comprises about 98 wt% active material based on the total weight of the dry composition (i.e. the slurry composition excluding the dispersing medium, or alternatively the electrode).

### Anode

The cell may comprise an anode. The anode may comprise an anode active material, such as metallic lithium, lithium/aluminium alloys, lithium/tin alloys, carbon, graphite, black lead, silicon, silicon/silicon composite, or a combination thereof. The anode may further comprise conductive additives and a binder.

The role of the anode active material is to reversibly bind the lithium. The mechanism of binding will vary and may be by intercalation/deintercalation (for instance with graphite), alloying/dealloying (for instance with silicon), or by plating/stripping (for instance with metallic lithium), or combinations thereof.

Preferably, the anode comprises carbon and/or silicon.

Suitable anode active materials are selected from silicon, SiOx, silicon-carbon composites, prelithiated silicon or its composites and oxides, types of carbon, including natural and synthetic carbons, graphite, carbon black, active carbon, carbon fibres, cokes and other carbonaceous materials.

In the anode, the anode active material may be present in an amount of from about 60-99.9 wt% active material, for example from about 70-99.9 wt%, from about 80-99.8 wt%, from about 90-99.6 wt%, or from about 95-99.5 wt% active material based on the total weight of the dry composition (i.e. the slurry composition excluding the dispersing medium, or alternatively the electrode).

Preferably the active layer comprises from about 96-99.5 wt% active material, even more preferably the active layer comprises about 98 wt% active material based on the total weight of the dry composition (i.e. the slurry composition excluding the dispersing medium, or alternatively the electrode).

### Cathode

The cell may comprise a cathode. The cathode may comprise cathode active material. The cathode may further comprise conductive additives and a binder.

The cathode active material may comprise a suitable material for use as an electrochemically active material in the cathode of a cell, particularly a lithium-ion cell.

The cathode active material may comprise an intercalation material, such as a lithium intercalation material, for example a lithium metal oxide which may include lithium and a transition metal.

The cathode active material may comprise any one or a mixture of two or more of lithium manganese oxide, lithium nickel oxide, lithium cobalt oxide, lithium nickel manganese oxide (LNMO), lithium nickel cobalt oxide, lithium nickel manganese cobalt oxide (NMC), lithium iron phosphate (LFP), lithium iron manganese phosphate (LFMP) and lithium nickel cobalt aluminium oxide (NCA).

Preferably, the cathode active material comprises lithium nickel manganese cobalt oxide (NMC).

The role of the cathode active material is to reversibly bind the lithium. The mechanism of binding will vary and may be by intercalation/deintercalation.

In the cathode, the cathode active material may be present in an amount of from about 60-99.9 wt% active material, for example from about 70-99.9 wt%, from about 80-99.8 wt%, from about 90-99.6 wt%, or from about 95-99.5 wt% active material based on the total weight of the dry composition (i.e. the slurry composition excluding the dispersing medium, or alternatively the electrode).

Preferably, the active layer comprises from about 96-99.5 wt% active material, even more preferably the active layer comprises about 98 wt% active material based on the total weight of the dry composition (i.e. the slurry composition excluding the dispersing medium, or alternatively the electrode).

### CONDUCTIVE ADDITIVES

The role of the conductive additives is to improve the electronic properties of the cathode and to provide an electrical connection between the particles of cathode active material in the cathode. As it is present merely to improve conductivity, it is optional as the inherent conductivity of the electrode active material may be sufficient.

For example, the conductive additives may comprise carbon black, acetylene black, graphene, graphite, mesocarbon microbead (MCMB), pitch-based carbon, coke powders, single-walled, thin-walled and/or multi-walled carbon nanotubes, metallic powders, or a combination thereof.

Preferred conductive additives are selected from carbon black, acetylene black, carbon nanotubes, or a combination thereof.

In some embodiments, no conductive additives are added to prepare the slurry. The omission of additional conductive additives in the slurry results in a battery with higher energy density, as the active material will constitute a bigger proportion of the cathode.

In an embodiment, the conductive additives may be present in an amount of from about 0 wt% to about 6 wt%, for example from 0 wt% to about 4 wt%, such as from about 0 wt% to about 3 wt%, preferably from about 0.1 wt% to 2 wt%, or from about 0.3 wt% to 2 wt%, based on the total weight of the dry composition (i.e. the slurry composition excluding the dispersing medium, or alternatively the electrode).

### BINDER

The binder polymer provides adhesive properties to the electrode, resulting in good adhesion of all the electrode components and improved peel strength. This leads to improved cycle life of the cell compared to a cathode that does not contain the binder polymer.

The binder of the present disclosure comprises polymers or copolymers with alkene functionalities. Exemplary binders include styrene-butadiene rubber (SBR), fluorine-based rubber, ethylene propylene rubber, butadiene rubber, isoprene rubber, acrylonitrile butadiene rubber (NBR).

Preferably the binders comprise polymers or copolymers of butadiene such as polybutadiene, styrene butadiene rubber (SBR), and acrylonitrile butadiene rubber (NBR). Preferably, the binder comprises styrene butadiene rubber (SBR).

Preferably, the binder is present in a small amount such as below 8 wt%, for example below 5 wt%, such as from 0.1 to 3 wt%, for example from 0.3 to 1.5 wt% based on the weight of the solids. The remainder of the solids are constituted of the electrode active materials and conductive additives.

### ORGANIC FLUORESCENT TAGS

At least some of the binder comprises a tagged binder, that is a binder comprising a polymer bound to an organic fluorescent tag.

Preferably, the organic fluorescent tag does not interfere or react with other components within a cell such as electrode active material and conductive additives.

The organic fluorescent tag typically comprises three parts: namely a "fluorescent moiety"; a "coupling moiety" and a "linker moiety".

Together, the coupling moiety and linker moiety connect the fluorescent moiety to the binder polymer, for instance to the backbone of the binder polymer. The coupling moiety will react with and covalently bond to the polymer backbone (typically forming a cycloaddition adduct), with the linker moiety acting as a spacer between the coupling moiety and the fluorescent moiety. Coupling may also occur to any pendant side chains on the polymer backbone.

The fluorescent moiety is capable of fluorescence when subjected to a suitable stimulus, such as UV radiation. Typically, the fluorescence will be quenched when the organic fluorescent tag is not bound via the linker moiety/coupling moiety to a substrate such as the polymer backbone of the binder. The quenching is typically via the coupling moiety, which converts to a form which no longer quenches the fluorescent moiety when the coupling moiety reacts and forms the adduct with the polymer backbone.

The choice of fluorescent moiety is not particularly limited and may include dyes known by the person skilled in the art. For example, the fluorescent moiety may include dyes such as BODIPY, ATTO, Oregon Green, HELIOS, 5-TAMRA, rhodamine, silicon-rhodamine, cresyl violet, coumarin 343, phenoxazine and analogs thereof.

By "analog" is meant a chemical structure that is structurally similar to the specific molecule. Usually, an analog differs from the original molecule in the possession and/or position of one or more functional groups or substructures.

Exemplary fluorescent moieties comprise the following as well as analogs thereof:

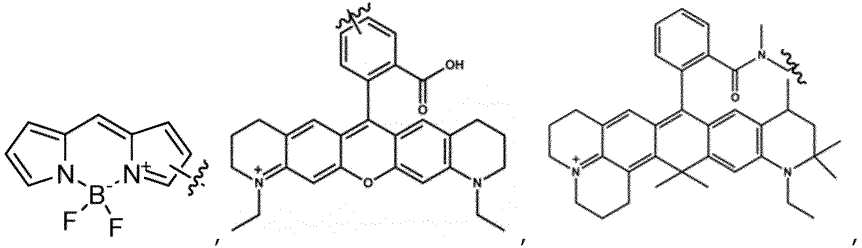

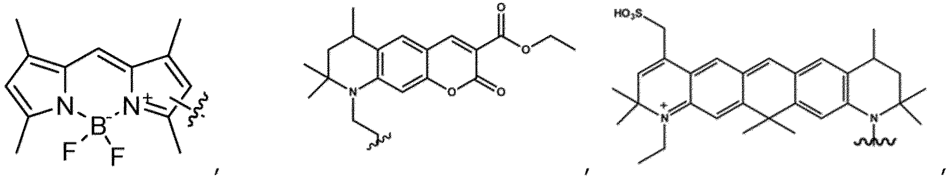

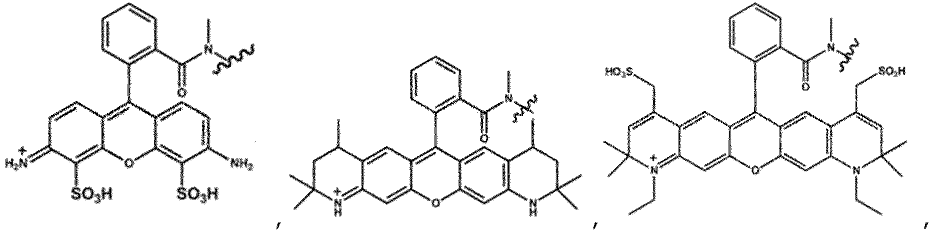

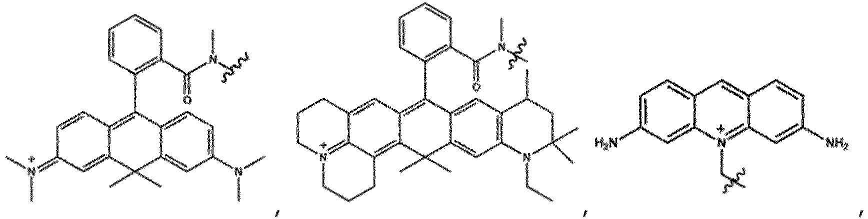

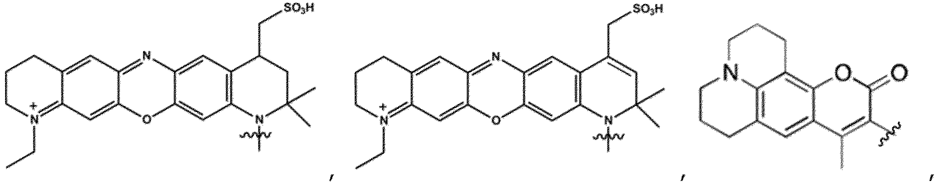

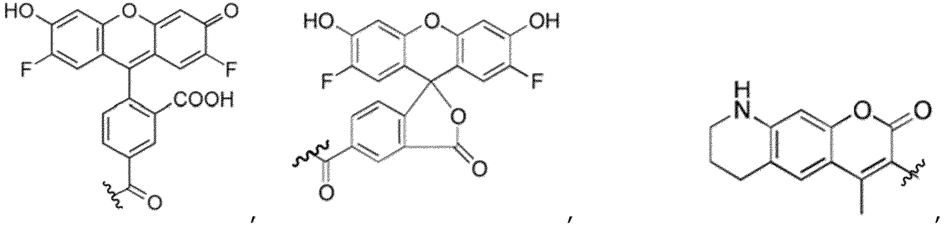

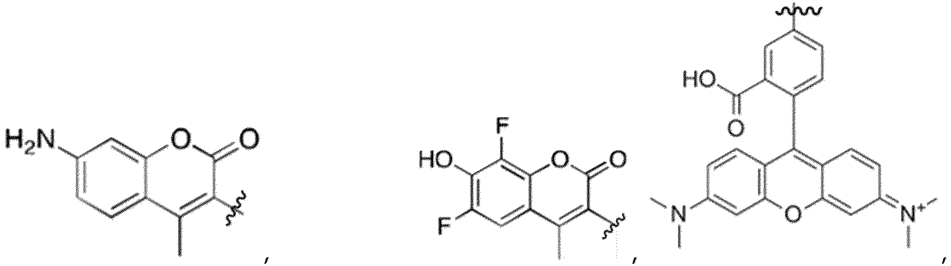

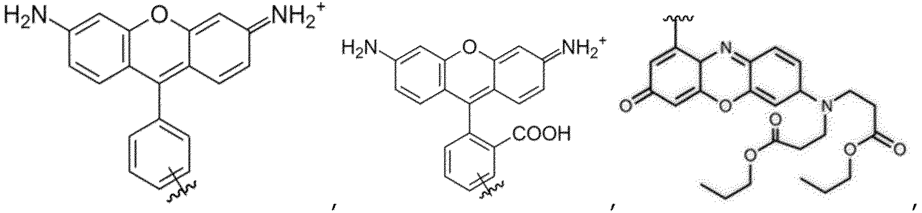

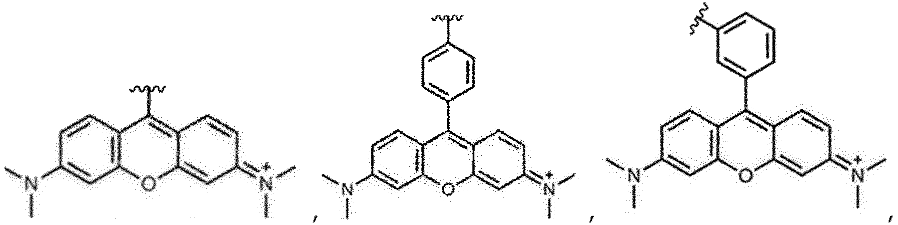

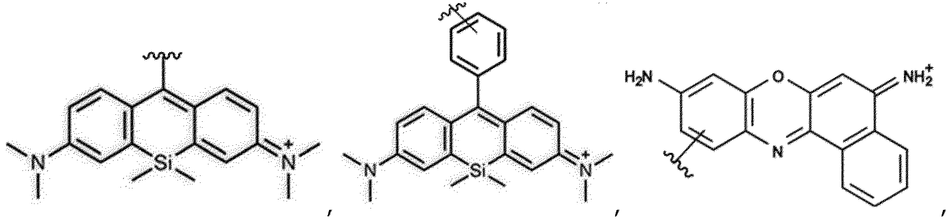

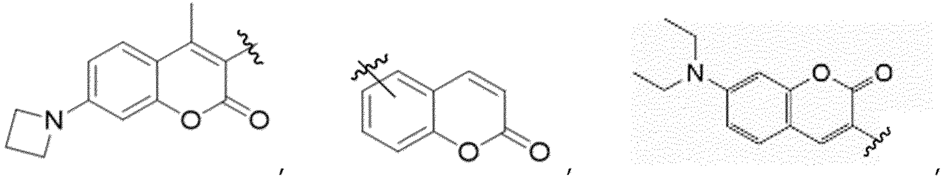

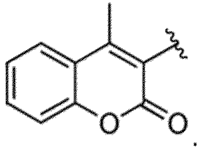

Preferably, the fluorescent moieties comprise the following as well as analogs thereof:

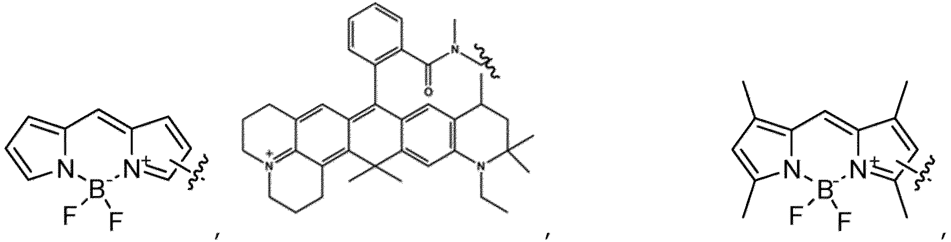

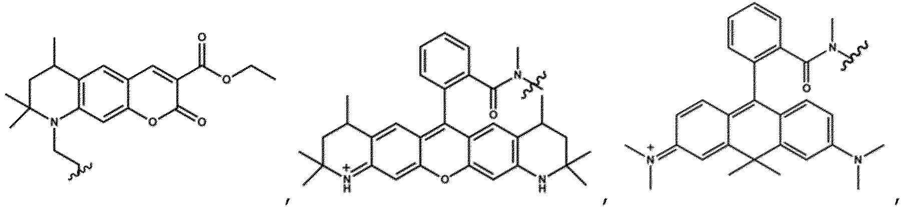

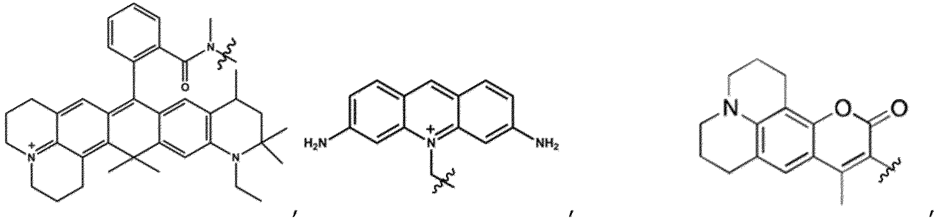

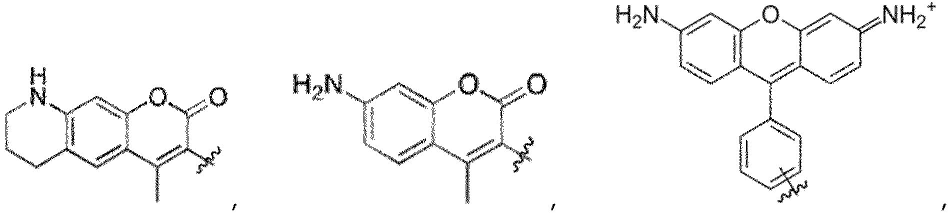

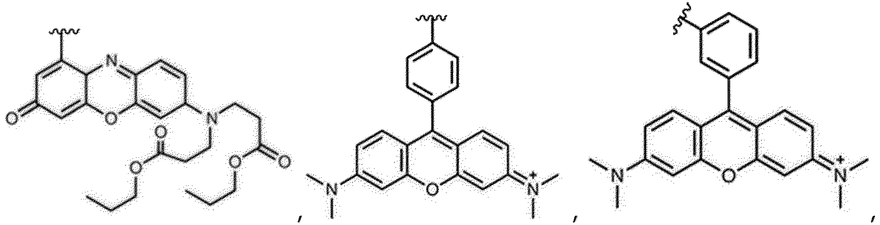

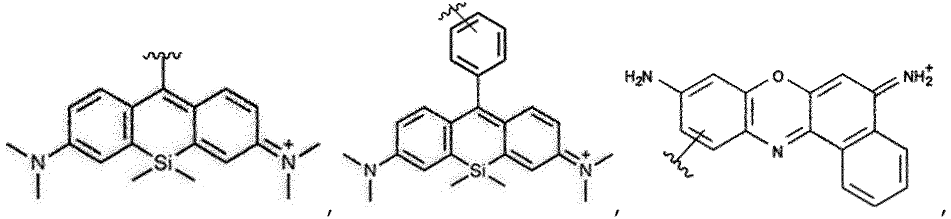

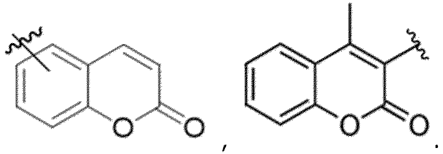

The linker moiety is not particularly limited and includes those known to the skilled person. Exemplary linkers are selected from the group consisting of C₁-C₆-alkylene, C₁-C₆-alkenylene, C₁-C₆-alkynylene, phenylene, C₁-C₆-alkenylene-phenylene, C₁-C₆-alkenylene-(N-C₁-C₆-alkyl)-amide, C₁-C₆-alkenylene ester, C₁-C₆-alkenylene ether, and derivatives thereof.

Optional derivatives include C₁-C₄ alkyl.

Preferably, the linker moiety is selected from phenylene and ethylenyl-phenylene.

Examples of coupling moieties capable of reacting with the double bonds of the binder include dienophiles as known by the person skilled in the art.

Preferably, the coupling moiety comprises a heterocycle such as tetrazine, triazine, thiophene, oxadiazole, diazole, or quinone. Other heterocycles capable of undergoing cycloadditions are applicable as well.

Preferably, the coupling moiety is tetrazine.

Tetrazine is particularly preferred as following cycloaddition it undergoes a retro-Diels Alder reaction to liberate nitrogen gas, resulting in the irreversible formation of a six membered heterocyclic ring containing two nitrogen atoms.

By "cycloaddition adduct" in the context of this disclosure is meant an adduct formed directly from a cycloaddition reaction as well as adducts that are produced following liberation of a gas following a retro-Diels Alder reaction.

Specifically, the following moiety is considered a cycloaddition adduct in the context of this disclosure: 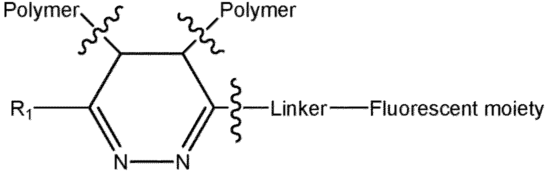 wherein
Polymer denotes the polymer backbone;
Linker denotes the linker moiety; and
R₁ denotes hydrogen, C₁-C₆-alkyl, C₁-C₆-alkenyl, C₁-C₆-alkynyl, aryl, C₁-C₆-aminoalkyl, C₁-C₆-hydroxyalkyl, C₁-C₆-alkyl ether, C₁-C₆-alkyl ester, or C₁-C₆-dialkyl amide.

Preferably, R₁ denotes hydrogen or methyl.

The above structure depicts a cycloaddition adduct, which has been formed by reacting a polymer backbone double bond with a tetrazine. Coupling may also occur to a pendant side chain on the polymer backbone.

Exemplary cycloaddition adducts formed by reacting a pendant double bond (i.e. a double bond in a side chain) with the coupling moiety of an organic fluorescent tag may be depicted as: 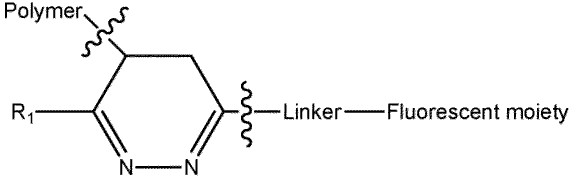 or 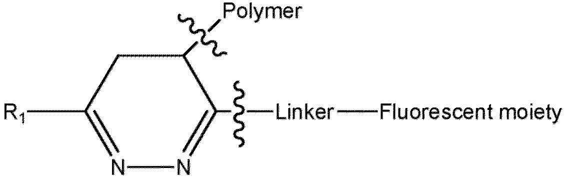 wherein
Polymer denotes the polymer backbone;
Linker denotes the linker moiety; and
R₁ denotes hydrogen, C₁-C₆-alkyl, C₁-C₆-alkenyl, C₁-C₆-alkynyl, aryl, C₁-C₆-aminoalkyl, C₁-C₆-hydroxyalkyl, C₁-C₆-alkyl ether, C₁-C₆-alkyl ester, or C₁-C₆-dialkyl amide.

Preferably, R₁ denotes hydrogen or methyl.

The coupling moiety may be further functionalized. For example, it may be bound to one or more C₁-C₆-alkyl, C₁-C₆-alkenyl, C₁-C₆-alkynyl, aryl, C₁-C₆-aminoalkyl, C₁-C₆-hydroxyalkyl, C₁-C₆-alkyl ether, C₁-C₆-alkyl ester, C₁-C₆-alkyl (N-C₁-C₆-alkyl) amide, or combinations thereof.

Preferably, the coupling moieties are able to do inverse electron demand Diels Alder (IEDDA) reactions with the double bonds of a binder material.

The inverse electron demand Diels Alder reaction is preferred given its high selectivity and fast reaction times. Other reactions within the framework of click chemistry may be applicable as well.

Preferably, the unreacted coupling moiety quenches the fluorescence emitted by the fluorescent moiety, while the bound coupling moiety does not. By unreacted coupling moiety is meant a coupling moiety that has not reacted with an alkene. Similarly, a bound coupling moiety is to be understood as a coupling moiety that has reacted with an alkene, such as by forming an adduct.

The quenching of the unbound coupling moiety ensures that the fluorescent signal will be significantly increased upon binding of the organic fluorescent tag. Therefore, the fluorescence emission of any unreacted organic fluorescent tag preferably does not interfere with the fluorescence emission of the bound organic fluorescent tags to a significant extent.

In this context, by "significant extent" is meant that the fluorescence peak for the bound tag is at least 2 times brighter than the unbound tag, preferably at least 3 times brighter, more preferably at least 10 times brighter.

Since tetrazines are known for their quenching properties, those are particularly preferred as the coupling moiety of the organic fluorescent tag. Tetrazines are able to diminish the fluorescence of a fluorescent moiety either by Förster Resonance Energy Transfer (FRET) or by a Through-Bond Energy Transfer (TBET) process.

Exemplary organic fluorescent tags comprising tetrazines that are capable of quenching the fluorescence of the fluorescent moiety comprise the molecules depicted below. Along with a drawing of each molecule, excitation and emission wavelengths (λₑₓ and λₑₘ respectively) are provided. Further, the light amplification that appears upon reaction of the tetrazine moiety is provided.

Generally speaking, the organic fluorescent tag may comprise
any of the fluorescent moieties described above;
any of the linkers described above; and
any of the coupling moieties described above.

Of course, preferred fluorescent moieties, linkers and coupling moieties may be used, in any combination.

Exemplary (unbound) organic fluorescent tags are selected from:

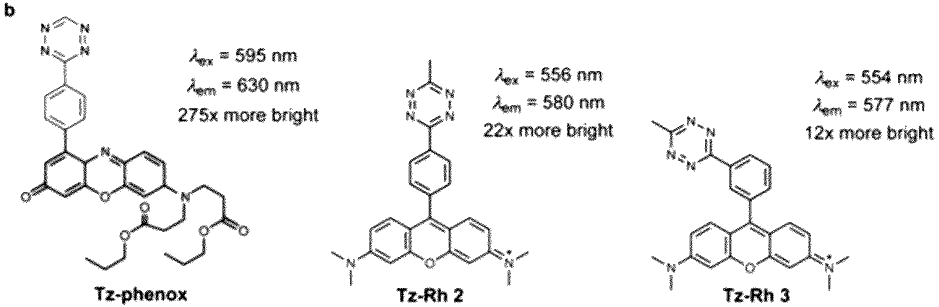

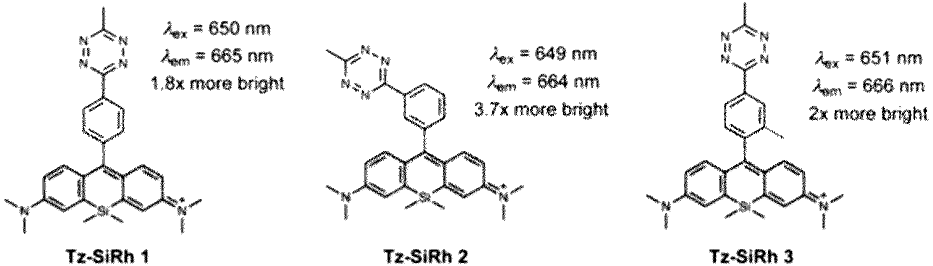

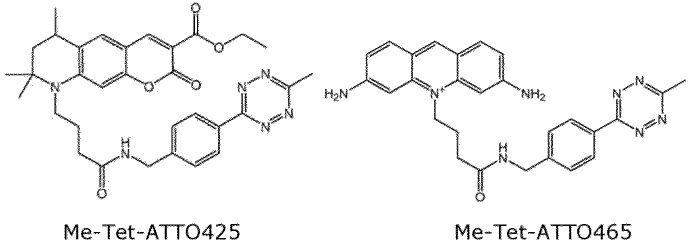

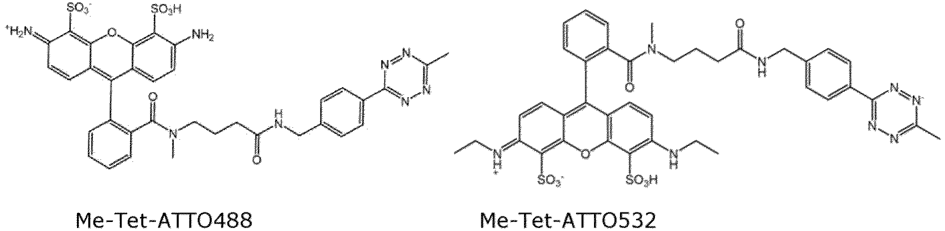

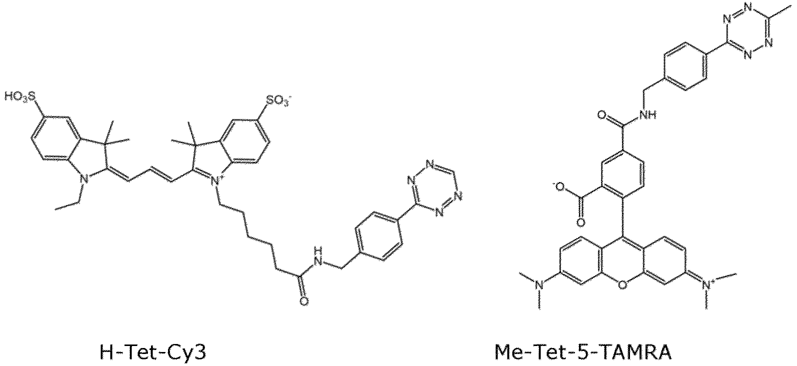

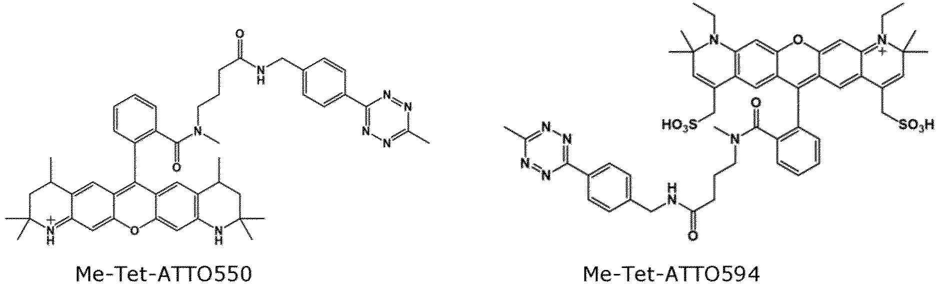

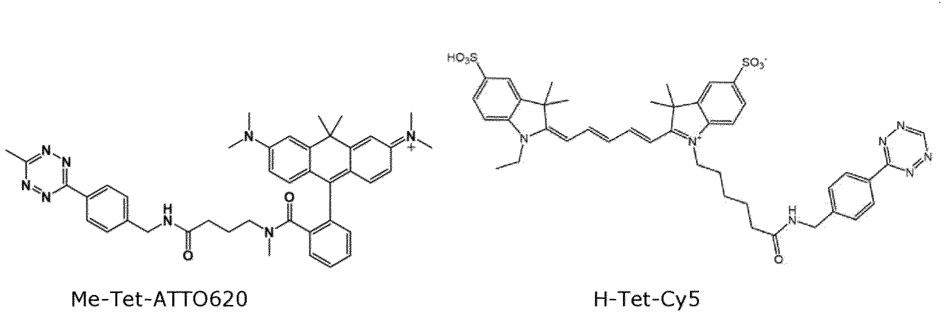

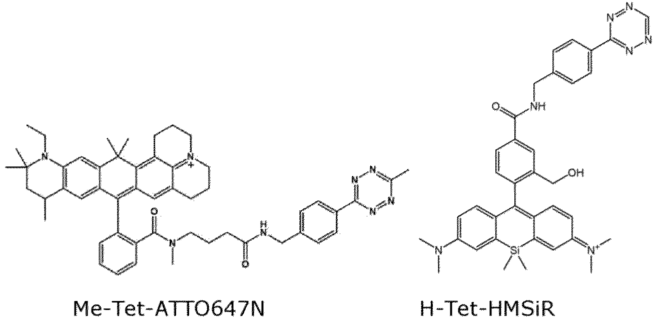

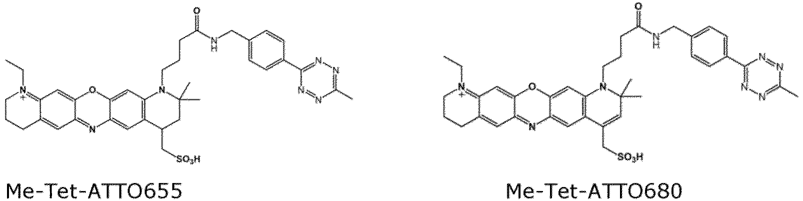

Particularly preferred (unbound) organic fluorescent tags include Tz-phenox, Tz-Rh 2, Tz-Rh 3, Tx-SiRh 1, Me-Tet-ATTO425, Me-Tet-ATTO465, Me-Tet-ATTO550, H-Tet-Cy5, Me-Tet-ATTO550, Me-Tet-ATTO620 and Me-Tet-ATTO647N.

When the binder contains multiple types of alkenes, selectivity towards one type over another may be achieved. For example, styrene butadiene rubber (SBR) contains both internal (secondary) and terminal (primary) alkenes. The terminal (primary) alkenes may also be referred to as pendant alkenes or as primary alkenes. Given the increased accessibility of the terminal alkenes, these will typically react before the internal ones. This selectivity can be further enhanced by employing relatively sterically hindered organic fluorescent tags.

In an embodiment of the invention, a sterically hindered organic fluorescent tag is used. This advantageously enhances selectivity towards reaction with primary alkenes.

### REACTING THE BINDER WITH ORGANIC FLUORESCENT TAG

In an embodiment of the disclosure, the binder is reacted with the organic fluorescent tag via a cycloaddition between the alkene functionalities of said binder and the organic fluorescent tag.

In a preferred embodiment of the disclosure, the binder is reacted with the organic fluorescent tag via an inverse electron demand Diels Alder (IEDDA) reaction between the alkene functionalities of said binder and the organic fluorescent tag.

Preferably, unreacted alkene functionalities remain within the binder polymer upon tagging.

By ensuring that only a fraction of the alkenes of the binder is tagged, the binder as a whole will typically be able to retain its properties.

A tagged binder is a polymer which is bound to an organic fluorescent tag.

An untagged binder is a polymer which is not bound to an organic fluorescent tag.

The binder may be tagged prior to or during cell fabrication.

In an embodiment of the invention, the binder is tagged prior to cell fabrication.

In an embodiment, a process of tagging a binder comprises the steps of
1) providing a mixture comprising a solvent, an organic fluorescent tag and a binder comprising a polymer with alkene functionalities;
2) coupling the organic fluorescent tag to the polymer to form a tagged binder;
3) optionally removing any unreacted organic fluorescent tag.

The choice of solvent is not particularly limited and may include solvents such as NMP (N-methyl pyrrolidone), DMSO (dimethyl sulphoxide), DMF (dimethylformamide), ethanol, methanol, ethyl acetate, water, acetone, THF (tetrahydrofuran) and diethyl ether.

Optionally, heating is applied to facilitate the coupling reaction. For example, the temperature may be between about 20 °C and about 80 °C, for example between about 25 °C and about 60 °C, such as between about 30 °C and about 50 °C. For example, the temperature may be about 40 °C.

Unreacted organic fluorescent tag may be removed by any suitable means, including for instance filtration. During such filtration, the organic fluorescent tag will typically pass through with the permeate, while polymer is retained by the filtration medium as the retentate.

Also disclosed is a tagged binder made by said process.

### SLURRY

To produce an electrode of a lithium-ion battery, a slurry with all the necessary components is formed. Typically, the slurry comprises electrode active material, binder, dispersing medium, and optionally conductive additives. The addition of a dispersing medium allows for easy preparation of the electrode.

Suitable dispersing medium are capable of dispersing the various components in the slurry without leading to undesirable side reactions or degradation of the components. Suitable dispersing medium include NMP (N-methyl pyrrolidone), DMSO (dimethyl sulphoxide), DMF (dimethylformamide), and water.

Preferably, the dispersing medium is NMP (N-methyl pyrrolidone) or water, particularly preferably water.

The slurry composition is formulated to a suitable viscosity to allow it to be processed into an electrode, for example by slot-die coating.

The slurry composition typically has a dynamic viscosity of from about 2 to about 50 Pa·s, for instance from about 5 to about 40 Pa.s or from about 5 to about 25 Pa·s, as measured at 25°C.

The slurry composition typically contains from about 50 to 90 wt% solids, such as from about 60 to 80 wt% solids, preferably from about 68 to 73 wt% solids, with the remainder being dispersing medium.

In an embodiment, a slurry for forming an electrode comprises dispersing medium, electrode active material, a tagged binder, and optionally conductive additive, wherein the tagged binder comprises a polymer bound to an organic fluorescent tag.

The slurry may further comprise untagged binder. By untagged binder is meant a binder which is not bound to an organic fluorescent tag.

In an embodiment of the invention, the slurry comprises at least 60wt% tagged binder based on the total amount of binder. For example, the slurry may comprise at least 70wt%, such as at least 80wt%, for example at least 90wt%, such as at least 95wt% tagged binder based on the total amount of binder.

In a preferred embodiment, the slurry comprises a maximum of 10wt% tagged binder based on the total amount of binder. For example, the slurry may comprise a maximum of 8wt%, such as a maximum of 6wt%, for example a maximum of 5wt%, such as a maximum of 3wt% tagged binder, for example a maximum of 1wt%, such as a maximum of 0.5wt% based on the total amount of binder.

An advantage of using only a small amount of tagged binder in the slurry is that the impact of the tag on the properties of the binder and resultant electrode are minimal. Even so, the brightness of the tag surprisingly allows easy and accurate monitoring of the binder distribution in the resultant electrode formed from the slurry.

The slurry comprising the tagged binder can be formed in multiple ways. The method of formation is not critical, and once formed it is typically stable at room temperature for at least one day, preferably at least one week. By "stable" in this context is meant that the solid particles do not settle.

Preferably, the binder is tagged prior to slurry formation.

In an embodiment, a method for forming a slurry comprises the steps of
I) providing a dispersing medium, electrode active material, a tagged binder, optionally conductive additive, and optionally an untagged binder, wherein the tagged binder comprises a polymer bound to an organic fluorescent tag; and
II) forming a slurry from said components.

In a related embodiment, a method for forming a slurry comprises the steps of
i. providing a mixture comprising a solvent, a binder comprising a polymer, and organic fluorescent tag;
ii. coupling the organic fluorescent tag to the polymer to form a mixture comprising tagged binder;
iii. providing a dispersion medium, electrode active material, optionally conductive additive, and optionally untagged binder; and
iv. forming a slurry from the mixture comprising tagged binder; dispersion medium, electrode active material, optionally conductive additive, and optionally untagged binder.

In such methods, the solvent used to carry out the reaction which leads to formation of the tagged binder may be the same or different to the dispersing medium used to form the slurry.

In some embodiments, the solvent is replaced by dispersion medium prior to step iv.

In a preferred embodiment, a method for forming a slurry comprises the steps of
A') provide a dispersion medium, electrode active material and optionally conductive additives,
B') form a slurry from said dispersion medium, electrode active material and optionally conductive additive,
C') provide a mixture comprising tagged binder, dispersion medium and optionally untagged binder,
D') add said mixture comprising tagged binder, dispersion medium and optionally untagged binder to the slurry comprising dispersion medium, electrode active material, and optionally conductive additive.

In another embodiment, a method for forming a slurry comprises the steps of
1) providing a mixture comprising solvent, a binder comprising a polymer, and organic fluorescent tag;
2) coupling the organic fluorescent tag to the binder to form a mixture comprising tagged binder;
3) optionally removing unreacted organic fluorescent tag;
4) forming a dispersion comprising dispersing medium, the tagged binder, and optionally an untagged binder; and
5) forming a slurry comprising the dispersion comprising dispersing medium, tagged binder and optionally untagged binder; an electrode active material, and optionally conductive additive.

In such methods, the solvent used to carry out the reaction which leads to formation of the tagged binder may be the same or different to the dispersing medium used to form the slurry.

Alternatively, the binder is tagged during slurry formation.

In another embodiment, a method of forming a slurry comprises the steps of
a. providing a slurry comprising dispersing medium, electrode active material, a binder comprising a polymer, organic fluorescent tag, and optionally conductive additives;
b. coupling the organic fluorescent tag to the polymer to form a tagged binder; and
c. optionally, adding untagged binder.

Such a method finds particular use as a means to intermittently check for the binder migration properties in electrodes formed from a particular slurry. For instance, step a. may comprise
taking a sample from a batch of slurry comprising dispersing medium, electrode active material, a binder comprising a polymer, and optionally conductive additives; and
adding an organic fluorescent tag to the sample.

The sample containing the tagged polymer may then be used to form an electrode (i.e. an additional step d. may be present comprising forming an electrode from said sample), thereby preferably allowing the binder migration properties of the batch of slurry to be investigated in a given process for forming electrodes.

An instance where this method finds particular use is as a quality assurance step to be carried out intermittently, for instance whenever a new batch of slurry is used in a processing line.

When these methods for forming a slurry are used (particularly methods wherein the organic fluorescent tag is added to a slurry), preferably, the fluorescence emission of any unreacted organic fluorescent tag will not interfere with the fluorescence emission of the bound organic fluorescent tags to a significant extent.

Furthermore, when using this method, the organic fluorescent tag, preferably, does not interfere or react with other components within a cell such as electrode active material and conductive additives.

The formed slurry composition is then used to prepare an electrode of a cell.

### ELECTRODE

An embodiment of the disclosure provides an electrode made from the slurry of the disclosure. The electrode may be an anode or a cathode.

An embodiment of the disclosure provides an electrode comprising the tagged binder of the disclosure. The electrode may be an anode or a cathode.

The electrode of the disclosure preferably comprises
an electrode active layer comprising electrode active material, tagged binder, optionally conductive additive, and optionally untagged binder, and
a conductive foil,
wherein the tagged binder comprises a polymer bound to an organic fluorescent tag.

An exemplary method of making an electrode comprising a tagged binder comprises the steps of
A) providing a slurry comprising dispersing medium, electrode active material, tagged binder, optionally conductive additive, and optionally untagged binder, wherein the tagged binder comprises a polymer bound to an organic fluorescent tag;
B) coating said slurry on a foil;
C) drying the slurry; and
D) calendering the slurry and optionally sintering the calendered slurry.

The method may apply to the formation of both anodes and cathodes.

The conductive foil will typically be aluminium when forming a cathode, and copper when forming an anode.

The formed electrode comprising a tagged binder may be used to prepare a cell.

### CELL

An embodiment of the disclosure provides a cell made from the slurry of the disclosure.

An embodiment of the disclosure provides a cell comprising the tagged binder of the disclosure.

The cell may include at least a cathode and an anode. The cell typically also comprises a separator disposed between the anode and cathode, said cathode, anode and separator forming an electrode assembly. The cell will typically comprise an electrolyte to facilitate the transport of lithium ions between the cathode and the anode, and a housing which is sealed to ensure the electrolyte is retained within the housing.

An exemplary method of making a cell comprises the steps of
i. providing an anode and a cathode of which at least one is prepared according to the disclosure; and
ii. assembling a cell from said anode and said cathode.

The cell may be a cylindrical, prismatic, coin cell or pouch cell.

The cell may be a lithium-ion cell, such as a secondary lithium-ion cell.

The present disclosure also relates to cells comprising the tagged binder of the disclosure.

These cells may be combined to form a battery system (i.e. an array of cells).

The cell or battery system may be used in a device, particularly a vehicle.

Thus, a further aspect of the disclosure may comprise a battery system comprising the electrode described herein, wherein the battery system comprises a battery energy storage system, such as grid-connected battery energy storage system. The battery system may be in a vehicle. In other examples, the battery system is housed in a vehicle accessory such as part of a trailer or roof-box for coupling to a vehicle.

### VISUALISATION

Tagging of the binder allows for easy visualisation using fluorescence microscopy.

Visualisation can occur either during or after cell fabrication.

In one embodiment, visualisation of the tagged binder occurs during cell fabrication.

An exemplary method for monitoring binder migration during cell fabrication comprises the steps of
a) providing a slurry comprising dispersing medium, electrode active material, tagged binder, and optionally conductive additive, wherein the tagged binder comprises a polymer bound to an organic fluorescent tag;
b) forming an electrode from said slurry;
c) using fluorescence microscopy to visualise the distribution of the tagged binder in the electrode; and
d) optionally adjusting steps a) and b) based on the results of step c) so as to adjust the distribution of the tagged binder in the electrode.

This method is particularly useful since it may be a non-destructive method.

Visualisation of the tagged binder may be (optionally in line) during electrode formation and prior to incorporation of the electrode in a cell, or may occur (optionally in an off line process) after cell fabrication.

For instance, an in line visualisation may be visualisation of the slurry prior to calendaring, after calendaring, or after drying of the calendared slurry.

After incorporation of the tagged binder in an electrode or a cell, the distribution of said tagged binder within said electrode or cell can be visualised using fluorescence microscopy.

Typically, this involves cross-sectioning the electrode or cell. The method of cross-sectioning is not particularly limited and includes both mechanical and non-mechanical cutting procedures.

Exemplary cross-sectioning methods (or cutting procedures) include sharp-edge cutting, laser cutting, embedded-mechanical polishing, ion-milling, and/or combinations thereof. For example, the electrode may first be cross-sectioned using sharp-edge cutting, whereafter ion milling is used to clean the surface of the cross-sectioned electrode. By providing a clean surface, a higher resolution may be achieved in the subsequent imaging process.

After cutting a cross-section of the electrode or cell, the location of the tagged binder can be visualized using fluorescence microscopy.

In an embodiment, a method for monitoring binder migration in an electrode comprises the steps of
A. providing a slurry comprising dispersing medium, electrode active material, tagged binder, and optionally conductive additive, wherein the tagged binder comprises a polymer bound to an organic fluorescent tag;
B. forming an electrode from the slurry and optionally forming a cell comprising the electrode;
C. cross-sectioning the formed electrode or cell; and
D. visualising the distribution of binder in the electrode or cell using fluorescence microscopy.

In an alternative embodiment, a method of visualising a tagged binder comprises the steps of
i) providing an electrode or a cell comprising a tagged binder, wherein the tagged binder comprises a polymer bound to an organic fluorescent tag;
ii) cross-sectioning the electrode or the cell; and
iii) visualising the distribution of binder in the electrode or the cell using fluorescence microscopy.

The skilled person would be familiar with fluorescence microscopy and capable of devising a suitable methodology of visualising the binder distribution within the electrode or cell.

For instance, suitable techniques typically involve using an excitation laser which is absorbed by the fluorescent moiety, which in turn fluoresces at a defined emission wavelength that may be detected by suitable means. As the excitation laser can be focussed in a given area of the electrode (or cell), the emission (fluorescence) associated with that area of excitation can be measured to provide information on the amount of binder which is present.

Suitable techniques that may be used include structured illumination microscopy, fluorescence correlation microscopy, and (rescan) confocal microscopy.

Unless otherwise indicated, all technical and scientific terms used herein have the same meaning as commonly understood by one of ordinary skill in the art to which this invention pertains.

All embodiments of the invention and particular features mentioned herein may be taken in isolation or in combination with any other embodiments and/or particular features mentioned herein (hence describing more particular embodiments and particular features as disclosed herein) without departing from the disclosure of the invention.

As used herein, the term "comprises" will take its usual meaning in the art, namely indicating that the component includes but is not limited to the relevant features (i.e. including, among other things). As such, the term "comprises" will include references to the component consisting essentially of the relevant substance(s).

Wherever the word 'about' is employed herein in the context of amounts, for example absolute amounts, weights, volumes, sizes, diameters etc., or relative amounts (e.g. percentages) of individual constituents in a composition or a component of a composition (including concentrations and ratios), timeframes, and parameters such as temperatures etc., it will be appreciated that such variables are approximate and as such may vary by ±10%, for example ±5% and preferably ±2% (e.g. ±1%) from the actual numbers specified herein. This is the case even if such numbers are presented as percentages in the first place (for example 'about 10%' may mean ±10% about the number 10, which is anything between 9% and 11%).'

## Claims

1. A slurry for forming an electrode comprising
dispersing medium, electrode active material, tagged binder, and optionally conductive additives;
wherein the tagged binder comprises a polymer bound to an organic fluorescent tag.

2. The slurry of claim 1, wherein the organic fluorescent tag comprises a coupling moiety, a linker moiety and a fluorescent moiety and wherein the organic fluorescent tag is bound to the polymer as a cycloaddition adduct formed from the coupling moiety; and
optionally wherein the cycloaddition is an inverse electron demand Diels Alder reaction.

3. The slurry of any of the preceding claims, wherein the slurry further comprises untagged binder; and
optionally wherein the slurry comprises at least 95wt% tagged binder based on the total amount of binder, or
wherein the slurry comprises a maximum of 1wt% tagged binder based on the total amount of binder.

4. A method of forming a slurry comprising the steps of
a. providing a dispersing medium, electrode active material, a binder comprising a polymer, organic fluorescent tag, and optionally conductive additives;
b. coupling the organic fluorescent tag to the polymer to form a tagged binder; and
c. optionally, adding untagged binder.

5. A method of forming a slurry comprising the steps of
i. providing a mixture comprising a solvent, a binder comprising a polymer and organic fluorescent tag;
ii. coupling the organic fluorescent tag to the polymer to form a mixture comprising tagged binder;
iii. providing dispersion medium, electrode active material, optionally conductive additive, and optionally untagged binder; and
iv. forming a slurry from the mixture comprising tagged binder; dispersion medium, electrode active material, optionally conductive additive, and optionally untagged binder; and
optionally, wherein step iv. comprises
forming a dispersion comprising tagged binder and untagged binder; and
forming a slurry from the dispersion comprising tagged binder and untagged binder; electrode active material, and optionally conductive additive.

6. The methods of any of claims 4-5, wherein the organic fluorescent tag comprises a coupling moiety, a linker moiety and a fluorescent moiety, and wherein the organic fluorescent tag is bound to the polymer as a cycloaddition adduct formed from the coupling moiety.

7. The methods of any of claims 4-6, wherein the fluorescence peak for the bound organic fluorescent tag is at least 2 times brighter than the fluorescence emission of any unreacted organic fluorescent tag.

8. A method for forming a slurry comprising the steps of
A') provide a dispersion medium, electrode active material and optionally conductive additives,
B') form a slurry from said dispersion medium, electrode active material and optionally conductive additive,
C') provide a mixture comprising tagged binder, dispersion medium and optionally untagged binder,
D') add said mixture comprising tagged binder, dispersion medium and optionally untagged binder to the slurry comprising dispersion medium, electrode active material, and optionally conductive additive.

9. The methods of any of claims 4 to 8, wherein the method forms a slurry according to claims 1 to 3.

10. An electrode made from the slurry of claims 1 to 3.

11. An electrode comprising
an electrode active layer comprising electrode active material, tagged binder, optionally conductive additive, and optionally untagged binder, and
a conductive foil,
wherein the tagged binder comprises a polymer bound to an organic fluorescent tag.

12. A cell comprising the electrode of claim 10 or claim 11.

13. A method of making an electrode comprising the steps of
A) providing a slurry comprising dispersing medium, electrode active material, tagged binder, optionally conductive additive; and optionally untagged binder, wherein the tagged binder comprises a polymer bound to an organic fluorescent tag;
B) coating said slurry on a foil;
C) drying the slurry;
D) calendering the slurry and optionally sintering the calendered slurry.

14. A method for monitoring binder migration during battery fabrication comprising the steps of
a) providing a slurry comprising dispersing medium, electrode active material, tagged binder, and optionally conductive additive, wherein the tagged binder comprises a polymer bound to an organic fluorescent tag;
b) forming an electrode from said slurry;
c) using fluorescence microscopy to visualise the distribution of the tagged binder in the electrode; and
d) optionally adjusting steps a) and b) based on the results of step c) so as to adjust the distribution of the tagged binder in the electrode;
optionally, wherein step c) comprises visualising the distribution of the tagged binder (optionally in an in line process) prior to the incorporation of the electrode in a cell, or wherein step c) comprises visualising the distribution of the tagged binder (optionally in an off line process) after incorporation of the electrode in a cell.

15. A method of visualising a tagged binder comprising the steps of
i) providing an electrode or a cell comprising a tagged binder, said tagged binder comprising a polymer bound to an organic fluorescent tag;
ii) cross-sectioning the electrode or the cell; and
iii) visualising the distribution of binder in the electrode or the cell using fluorescence microscopy;
optionally, wherein the cross-sectioning includes mechanical and non-mechanical cutting procedures.
